# EUROPEAN PATENT SPECIFICATION

(11) **EP 3 888 833 B1**
(45) Date of publication and mention of the grant of the patent: **04.12.2024**
(21) Application number: 21162723.7
(22) Date of filing: 16.03.2021
(51) Int. Cl.: B23K 9/095, B23K 9/10, B23K 9/173

(54) **WELDING-TYPE POWER SUPPLY WITH PROVISION OF FEEDBACK BASED ON SYNERGIC CONTROL OF A WELDING-TYPE OUTPUT**
SCHWEISSLEISTUNGSSYSTEM FÜR DIE RÜCKKOPPLUNG BASIEREND AUF EINER SYNERGETISCHEN STEUERUNG EINER SCHWEISSLEISTUNG
SOURCE DE PUISSANCE DE TYPE SOUDAGE AVEC FOURNITURE D'UNE RÉTROACTION BASÉE SUR LE CONTRÔLE SYNERGIQUE D'UNE SORTIE DE TYPE SOUDAGE REPOUSSER

(30) Priority: 31.03.2020 US 202063002709 P; 23.02.2021 US 202117182384
(43) Date of publication of application: 06.10.2021
(73) Proprietor: Illinois Tool Works, Inc., Glenview, Illinois 60025 (US)
(72) Inventor: SCHNEIDER, Joseph C., Glenview, Illinois 60025 (US); DAVIDSON, Robert R., Glenview, Illinois 60025 (US); KNOENER, Craig Steven, Glenview, Illinois 60025 (US); TYLER, Charles Ace, Glenview, Illinois 60025 (US); BUNKER, Thomas A., Glenview, Illinois 60025 (US)
(74) Representative: HGF

(56) References cited:
- WO-A1-2019/202854
- US-A1- 2017 046 976
- US-A1- 2018 126 476
- US-A1- 2019 070 689

## Description

This present invention relates generally to welding and, more particularly, to a welding-type power supply to provide feedback based on synergic control of a welding-type output US20190070689A1 (describing the preamble of claim 1) discloses methods and apparatus to synergically control a welding-type output during a welding-type operation. In particular, US20190070689A1 describes an example of a welding-type power supply comprising: a power conversion circuit configured to convert input power to welding-type power and to output the welding-type power to a welding-type torch; a communication circuit configured to receive a control signal from a remote control device during a welding-type operation; and a control circuit configured to synergically control a voltage of the welding-type power and a wire feed speed based on the control signal.US20170046976A1 discloses systems and methods for stick welding applications. US20180126476A1 discloses a system for aiding a user in at least one of welding, cutting, joining, and cladding operations.

### SUMMARY

A welding-type power supply according to one aspect of the present invention is defined in claim 1.

Further preferred embodiments of the present invention are defined in the dependent claims.

Methods and apparatus to provide feedback based on synergic control of a welding type output are disclosed as illustrated by and described in connection with the attached figures.

### BRIEF DESCRIPTION OF THE DRAWINGS

FIG. 1 is a block diagram of an example welding-type system including a remote wire feeder and configured to provide synergic power control, in accordance with aspects of this disclosure.
FIG. 2 is a block diagram of another example welding-type system configured to provide synergic power control with a welding-type power supply having an integrated wire feeder, in accordance with aspects of this disclosure.
FIG. 3 is a block diagram of another example welding-type system including a power control circuit configured to provide synergic power control, in accordance with aspects of this disclosure.
FIG. 4 is a block diagram of an example implementation of the power control circuit of FIG. 3.
FIG. 5A is an example table including corresponding voltage, wire feed speed, and process modes that may be used to determine voltage setpoints, wire feed speed setpoints, and/or process modes for performing welding operations.
FIG. 5B is another example table including schedules and corresponding weld parameters for performing welding operations.
FIG. 6 is a flowchart representative of example machine readable instructions which may be executed by the welding-type system of FIGS. 1, 2, and/or 3 to synergically control a welding system based on input received during a welding operation.
FIGS. 7A-7D illustrate example interfaces that may be used to implement the display of FIGS. 1-3 to provide visual feedback based on a control signal used to synergically control a welding output.
FIG. 8 illustrates a flowchart representative of example machine readable instructions which may be executed by the welding-type system of FIGS. 1, 2, and/or 3 to synergically control the welding-type system based on a control signal and to output a feedback signal to the operator based on the control signal.

The figures are not necessarily to scale. Where appropriate, similar or identical reference numbers are used to refer to similar or identical components.

### DETAILED DESCRIPTION

Gas Metal Arc Welding (GMAW), also referred to as MIG welding, is conventionally performed with a wire feed speed and voltage that is preselected prior to performing a weld. For instance, conventional welding power supplies may be controlled via knobs or buttons on the front panel of the welding power supply. If the operator selects too little power, the resulting weld may lack fusion and the weld may fail. Conversely, if the operator selects too much power, burn-through of the material may occur, creating a hole instead of a welded joint.

Some conventional welders, such as the Millermatic^{®} 211 Auto-Set^{™} MIG Welder from Miller Electric Mfg. Co., makes the task of selecting weld parameters easier by permitting the operator to select both wire feed speed and voltage based on the wire size and material thickness. Preselection of the welding parameters is effective when the workpiece is of a uniform thickness and geometry, but in some situations the workpiece may have varying thickness and/or geometry. For instance, if an operator is welding a workpiece in which the workpiece progressively narrows, the heat sink capability of the metal is reduced and using the same power settings for the entire distance may result in burn-through and creating a hole.

Disclosed example methods and apparatus provide a welding-type power supply for GMAW welding that enables an operator to synergically adjust the output power during welding. An example method of synergic adjustment by an operator involves manipulating a control on the torch that is easily accessible to the operator during welding.

Where conventional welding-type power supplies may provide recommended voltage and wire feed speed, and permit a user to vary the voltage and/or wire feed speed within a specified narrow range, disclosed examples provide a control device that permits the operator to adjust the output power of a GMAW welding-type power supply over a wide operation range. For example, a manually adjustable control on the weld torch may be provided to adjust the power synergically by simultaneously changing the output voltage and the wire feed speed to raise or lower the output power to suit the work conditions and the weldment. The example welding torch, and the attached power supply and/or remote wire feeder, changes the welding output power and/or the wire feed speed while the operator is welding with an easy to use method such as a variable-input (e.g., analog input) trigger.

Some example methods and apparatus further automatically change a mode of operation or deposition mode during welding, such that the operator can change processes on-the-fly in a continuously variable manner, such that the operator has a very wide operating range of the output power. For example, if the operator wants to go from a first power operation or deposition mode (e.g., short arc welding) to a higher power operation or deposition mode (e.g., pulse spray welding), such as if the operator encounters an increase in the thickness of the work piece being welded, a power control circuit may follow a synergic control scheme to slowly raise the output voltage and the wire feed speed until the wire transitions from a short arc condition to a pulsed spray condition. In another example scenario, the power control circuit may allow the operator to transition from a first power operation or deposition mode (e.g., short arc welding) to a lower power operation or deposition mode (e.g., Regulated Metal Deposition (RMD^{™})). Disclosed examples enable an operator to enter other deposition modes, such as a Controlled Short Circuit (CSC) process, and/or arcless 'hotwire' deposition. An operator may change between the different deposition modes on-the-fly during a welding operation to finely control wire deposition and/or heat input to the weld.

Some disclosed example systems and methods provide a trigger hold feature that enables the operator to set a particular synergic output. When the trigger hold is engaged, the operator may release the trigger (or foot pedal, etc.) while the power supply maintains the synergic output to continue the welding-type operation. In some examples, the trigger hold is engaged after a substantially constant output (e.g., less than a threshold deviation) is sustained for a threshold time period. In some such examples, the trigger hold feature times out and is disable in response to the operator not using the trigger hold function within a threshold time period. For instance, if the operator is unaware that the trigger hold feature is available and ready to be engaged, or if the operator wishes to continue using the synergic output instead of engaging the trigger hold feature, the trigger hold feature times out and release of the trigger is less likely to cause an unintended continuation of welding.

Some disclosed example systems and methods output a perceptible alert to inform the operator that the trigger hold may be engaged (e.g., when the input device is released), such as a visual alert, an audible alert, a haptic alert, and/or any other type of perceptible feedback.

Because the input device (e.g., the trigger, foot pedal, or other variable input device) may be difficult for some operators to maintain in a steady position, some disclosed systems and methods filter the input signal used to control the synergic output. In some examples, the filter reduces the influence of short-term or transient changes in the output. Some example systems and methods filter the input signal by applying weights to the input signals, and using multiple, weighted samples of the input signal to determine a filtered input signal, which is then used to determine the synergic output. Recent samples may be weighted lower, with the weight applied to a given sample increasing as the age of the sample increases. The number of most recent samples may be limited to enable the operator to responsively change the synergic output during the weld.

In some disclosed example systems and methods, the range of input signal values (e.g., from a trigger, foot pedal, or other variable input device) is mapped to an entire range of output power of which the welding-type system is capable. In other disclosed example systems and methods, the range of input signal values is mapped to a subrange of synergic output, and/or subranges of variables (e.g., voltage and wire feed speed) involved in generating the synergic output. In some examples, the subrange of synergic output is determined based on one or more physical characteristics of the welding operation, such as workpiece thickness, workpiece material, wire diameter, wire material, and/or shielding gas composition. Additionally or alternatively, subranges of the input signal range are mapped to separate subranges of the synergic output, in which the subranges of the input signal range are not equally wide and/or the subranges of the synergic output are not equally wide.

Some disclosed example systems and methods include one or more operator feedback devices, which may be controlled to provide feedback to the operator in response to one or more events and/or other information about the synergic output. Feedback that is provided to the operator via the operator feedback devices includes, according to the present invention, generating feedback to generate an output that is directly proportional or inversely proportional to a value of the control signal. Further feedback provided to the operator can include generating feedback in response to identifying that a synergic control signal is outside of a predetermined range of values of the control signal, generating feedback in response to the control signal changing from a first predetermined range of values of the control signal to a second predetermined range of values of the control signal, and/or generating feedback to provide any other information about the synergic control to the operator and/or events associated with the synergic control.

Some disclosed example systems and methods involve synergically controlling the value of multiple welding-type parameters based on the value of a control signal, such as by looking up the parameters in a lookup table. In other examples, a primary parameter or key parameter (e.g., voltage, current, power, etc.) may be correlated to the control signal, and one or more secondary parameters (e.g., wire feed speed, pulse trim, etc.) are adjusted based on the changes to the primary parameter.

Additionally or alternatively, instead of modifying parameters based on the control signal or a primary parameter, one or more parameters may be controlled via the control signal while the other operative parameters are held constant. Holding parameters constant may enable an operator to, for example, vary a particular parameter of interest according to the conditions of the weld without having multiple adjustments made by the welding-type system in response to the modified parameter.

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a welding-type power supply refers to any device capable of, when power is applied thereto, supplying welding, cladding, plasma cutting, induction heating, laser (including laser welding, laser hybrid, and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

As used herein, a "weld voltage setpoint" refers to a voltage input to the power converter via a user interface, network communication, weld procedure specification, or other selection method.

As used herein, a "circuit" includes any analog and/or digital components, power and/or control elements, such as a microprocessor, digital signal processor (DSP), software, and the like, discrete and/or integrated components, or portions and/or combinations thereof.

As used herein, "synergic control" refers to controlling two or more variables or components according to a specified relationship. In some examples, a primary variable is controlled via an input device, and one or more variables are synergically controlled according to the primary variable. As used herein, "synergic output" refers to welding-type power in which two or more variables associated with generating the welding-type power are controlled according to a specified relationship.

As used herein, the term "operator feedback device" refers to a feedback device capable of outputting a perceptible signal to the operator, such as visual, audible, haptic (e.g., tactile), and/or other operator-perceptible feedback. An operator feedback device does not include changes to a welding arc or welding output that typically occur during conventional arc welding operations, such as sounds typically used by a weld operator to subjectively judge whether weld parameters are acceptable (e.g., crackling or popping sounds, the "frying bacon" sound often considered to correspond to good welding conditions, etc.).

As used herein, the term "remote wire feeder" refers to a wire feeder that is not integrated with the power supply in a single housing.

Disclosed example welding-type power supplies include a power conversion circuit, a communication circuit, and a control circuit. The power conversion circuit converts input power to welding-type power and outputs the welding-type power to a welding-type torch. The communication circuit receives a control signal from a remote control device during a welding-type operation, and the control circuit synergically controls a parameter (e.g., voltage) of the welding-type power and a wire feed speed based on the control signal.

In some examples, the control circuit synergically controls the voltage and the wire feed speed by: setting a commanded power level of the welding-type power based on the control signal, determining the voltage and the wire feed speed corresponding to the commanded power level, controlling the power conversion circuit to output the voltage, and controlling a wire feeder based on the wire feed speed. In some such examples, the control circuit accesses a lookup table to determine the commanded power level of the welding-type power based on the control signal.

In some example welding-type power supplies, the communication circuit receives the control signal from at least one of the welding-type torch or a foot pedal. In some examples, the control circuit synergically controls the voltage of the welding-type power by changing a deposition mode from a first deposition mode to a second deposition mode in response to the control signal. In some such examples, the first deposition mode is an arcless hotwire mode, a regulated metal deposition mode, a controlled short circuit mode, a short arc mode, a pulse spray mode, or a spray transfer mode, and the second deposition mode is another of the arcless hotwire mode, the regulated metal deposition mode, the controlled short circuit mode, the short arc mode, the pulse spray mode, or the spray transfer mode.

In some example welding-type power supplies, the control circuit synergically controls the voltage of the welding-type power and the wire feed speed to enable manual control of a heat input to the welding-type operation in real time during the welding-type operation. In some examples, the control circuit synergically controls the voltage of the welding-type power and the wire feed speed by controlling a remote wire feeder based on the wire feed speed. In some example welding-type power supplies, the control circuit selects the voltage from a substantially contiguous voltage range and selects the wire feed speed from a substantially contiguous wire feed speed range.

Disclosed example control devices for a welding-type system include an input circuit, a control circuit, and an output circuit. The input circuit identifies a user input during a welding-type operation involving welding-type power. The control circuit determines a voltage adjustment of the welding-type power and a wire feed speed adjustment based on the user input, and based on a synergic control scheme for a voltage of the welding-type power and a wire feed speed. The output circuit generates one or more control signals to control a welding-type power supply providing the welding-type power to perform the voltage adjustment and to control a wire feeder to perform the wire feed speed adjustment.

In some example control devices, the control circuit determines the voltage adjustment and the wire feed speed adjustment based on the synergic control scheme by looking up the voltage adjustment and the wire feed speed adjustment in a lookup table. In some examples, the control circuit changes a deposition mode from a first deposition mode to a second deposition mode in response to the user input based on at least one of the voltage adjustment or the wire feed speed adjustment. In some such examples, the first deposition mode is an arcless hotwire mode, a regulated metal deposition mode, a controlled short circuit mode, a short arc mode, a pulse spray mode, or a spray transfer mode, and the second deposition mode is another of the arcless hotwire mode, the regulated metal deposition mode, the controlled short circuit mode, the short arc mode, the pulse spray mode, or the spray transfer mode.

In some example control circuits, the output circuit transmits at least one of the one or more control signals to a remote wire feeder to control the remote wire feeder based on the wire feed speed adjustment. In some examples, the output circuit transmits at least one of the one or more control signals to the welding-type power supply to control the welding-type power supply based on the voltage adjustment. In some examples, the control device is a welding-type torch, a foot pedal, the welding-type power supply, or a remote wire feeder.

According to the invention defined in the claims, there is provided a welding-type power supply that includes: power conversion circuitry configured to convert input power to welding-type power and to output the welding-type power to a welding-type torch; a communication circuit configured to receive a synergic control signal from a remote control device during a welding-type operation; and control circuitry. The control circuitry is configured to: based on the synergic control signal, synergically control at least two of a voltage of the welding-type power output by the power conversion circuitry, a current of the welding-type power, or a wire feed speed; and output a feedback control signal to control an operator feedback device to generate an output that is directly proportional or inversely proportional to a value of the synergic control signal.

In some embodiments of the invention, the control circuitry is configured to output the feedback control signal to control at least one of a vibration motor, an eccentric rotating mass actuator, or a piezoelectric actuator to provide haptic feedback to an operator. In some embodiments, the control circuitry is configured to output the feedback control signal in response to identifying that the synergic control signal is outside of a predetermined range of values of the synergic control signal.

In some embodiments, the control circuitry is configured to output the feedback control signal in response to the synergic control signal changing from a first predetermined range of values of the synergic control signal to a second predetermined range of values of the synergic control signal. In some embodiments, the control circuitry is configured to synergically control the voltage and the wire feed speed by: setting a commanded power level of the welding-type power based on the synergic control signal; determining the voltage and the wire feed speed corresponding to the commanded power level; controlling the power conversion circuitry to output the voltage; and controlling a wire feeder based on the wire feed speed.

In some embodiments, the communication circuit is configured to receive the synergic control signal from the welding-type torch. In some embodiments, the control circuitry is configured to output the feedback control signal to the welding-type torch to control the operator feedback device on the welding-type torch. In some embodiments, the control circuitry is configured to synergically control the voltage of the welding-type power by changing a deposition mode from a first deposition mode to a second deposition mode in response to the synergic control signal, and the control circuitry is configured to output the feedback control signal in response to changing the deposition mode.

In some embodiments, the synergic control signal is configured to output the feedback control signal to control an audio output device to provide audio feedback to an operator. In some embodiments, the synergic control signal is configured to output the feedback control signal to control a visual output device to provide visual feedback to an operator. In some embodiments, the visual feedback includes a graphic representative of a range of the control signal, one or more subranges of the control signal, a range of at least one of the synergically controlled voltage, current, or wire feed speed, and one or more subranges of the at least one of the synergically controlled voltage, current, or wire feed speed.

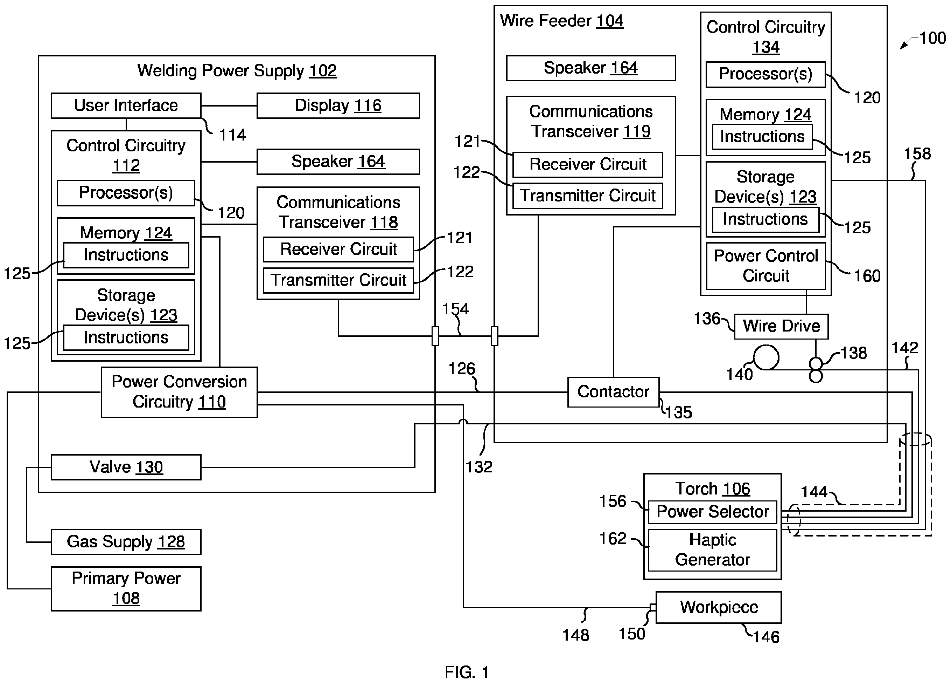

Turning now to the drawings, FIG. 1 is a block diagram of an example welding system 100 having a welding-type power supply 102, a wire feeder 104, and a welding torch 106. The welding system 100 powers, controls, and supplies consumables to a welding application. The example welding torch 106 is configured for gas metal arc welding (GMAW). In the illustrated example, the power supply 102 is configured to supply power to the wire feeder 104, and the wire feeder 104 may be configured to route the input power to the welding torch 106. In addition to supplying an input power, the wire feeder 104 supplies a filler metal to a welding torch 106 for various welding applications (e.g., GMAW welding, flux core arc welding (FCAW)).

The power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The power supply 102 includes a power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power 108) to welding-type power based on a weld voltage setpoint and outputs the welding-type power via a weld circuit.

In some examples, the power conversion circuitry 110 is configured to convert the primary power 108 to both welding-type power and auxiliary power outputs. However, in other examples, the power conversion circuitry 110 is adapted to convert primary power only to a weld power output, and a separate auxiliary converter is provided to convert primary power to auxiliary power. In some other examples, the power supply 102 receives a converted auxiliary power output directly from a wall outlet. Any suitable power conversion system or mechanism may be employed by the power supply 102 to generate and supply both weld and auxiliary power.

The power supply 102 includes a control circuitry 112 to control the operation of the power supply 102. The power supply 102 also includes a user interface 114. The control circuitry 112 receives input from the user interface 114, through which a user may choose a process and/or input desired parameters (e.g., voltages, currents, particular pulsed or non-pulsed welding regimes, and so forth). The user interface 114 may receive inputs using any input device, such as via a keypad, keyboard, buttons, touch screen, voice activation system, wireless device, etc. Furthermore, the control circuitry 112 controls operating parameters based on input by the user as well as based on other current operating parameters. Specifically, the user interface 114 may include a display 116 for presenting, showing, or indicating, information to an operator. The control circuitry 112 may also include interface circuitry for communicating data to other devices in the system 100, such as the wire feeder 104. For example, in some situations, the power supply 102 wirelessly communicates with the wire feeder 104 and/or other welding devices within the welding system 100. Further, in some situations, the power supply 102 communicates with the wire feeder 104 and/or other welding devices using a wired connection, such as by using a network interface controller (NIC) to communicate data via a network (e.g., ETHERNET, 10BASE2, 10BASE-T, 100BASE-TX, etc.).

The control circuitry 112 includes at least one processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device and/or logic circuit. For example, the processor 120 may include one or more digital signal processors (DSPs).

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage).

The example communications transceiver 118 includes a receiver circuit 121 and a transmitter circuit 122. Generally, the receiver circuit 121 receives data transmitted by the wire feeder 104 and the transmitter circuit 122 transmits data to the wire feeder 104. The example wire feeder 104 also includes a communications transceiver 119, which may be similar or identical in construction and/or function as the communications transceiver 118.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a gas conduit 132 (which in some implementations may be packaged with the welding power output) to the wire feeder 104 which provides the shielding gas to the welding application. In some examples, the welding system 100 does not include the gas supply 128, the valve 130, and/or the gas conduit 132. In some other examples, the valve 130 is located in the wire feeder 104, and, the gas supply 128 is connected to the wire feeder 104.

In some examples, the wire feeder 104 uses the welding power to power the various components in the wire feeder 104, such as to power wire feeder control circuitry 134. As noted above, the weld cable 126 may be configured to provide or supply the welding power. The wire feeder control circuitry 134 controls the operations of the wire feeder 104. In some examples, the wire feeder 104 uses the wire feeder control circuitry 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder control circuitry 134 and configured to enable or inhibit welding power to continue to flow to the weld cable 126 for the welding application. In some examples, the contactor 135 is an electromechanical device. However, the contactor 135 may be any other suitable device, such as a solid state device, and/or may be omitted entirely and the weld cable 126 is directly connected to the output to the welding torch 106. The wire feeder 104 includes a wire drive 136 that receives control signals from the wire feeder control circuitry 134 to drive rollers 138 that rotate to pull wire off a spool 140 of wire. The wire drive 136 feeds electrode wire to the welding torch 106. The wire is provided to the welding application through a torch cable 142. Likewise, the wire feeder 104 may provide the shielding gas from the gas conduit 132 and combined in a torch cable 144. The electrode wire, the shield gas, and the power from the weld cable 126 are bundled together in a single torch cable 144 and/or individually provided to the welding torch 106.

The welding torch 106 delivers the wire, welding power, and/or shielding gas for a welding application. The welding torch 106 is used to establish a welding arc between the welding torch 106 and a workpiece 146. A work cable 148 couples the workpiece 146 to the power supply 102 (e.g., to the power conversion circuitry 110) to provide a return path for the weld current (e.g., as part of the weld circuit). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

A communication cable 154 connected between the power supply 102 and the wire feeder 104, which enables bidirectional communication between the transceivers 118, 119. The communications transceivers 118 and 119 may communicate via the communication cable 154, via the weld circuit, via wireless communications, and/or any other communication medium. Examples of such communications include weld cable voltage measured at a device that is remote from the power supply 102 (e.g., the wire feeder 104).

The example torch 106 includes a power selector circuit 156 to permit the user of the torch (e.g., the welder) to make adjustments to the welding output from the torch in a synergic manner. For example, as the user makes adjustments via the power selector circuit 156, the power supply 102 and the wire feeder 104 synergically change the output voltage and the wire feed speed of the weld. An example implementation of the power selector circuit 156 is a pressure-sensitive trigger. For instance, the torch 106 may include the same trigger used in conventional welding-type torches, modified to provide an analog signal or encoded digital signal to represent an amount of input to the trigger. In some examples, the operator may incrementally depress the trigger (e.g., apply more pressure) to synergically increase the voltage and wire feed speed and/or incrementally release the trigger (e.g., apply less pressure) to synergically decrease the voltage and wire feed speed. Alternative implementations of the power selector circuit 156 include a wheel or slide configured to control a potentiometer and positioned to enable an operator to manipulate the input while welding (e.g., while simultaneously holding the trigger).

The power selector circuit 156 outputs a control signal 158 to a power control circuit 160 of the wire feeder 104. The control signal 158 may be an analog or digital signal that represents the output from the power selector circuit 156. The example power control circuit 160 may be implemented using the control circuitry 134 and/or as a separate circuit. The power control circuit 160 identifies a user input (e.g., an input from the power selector circuit 156) during a welding-type operation involving welding-type power. The power control circuit 160 determines, based on the user input, a voltage adjustment for the welding-type power and a wire feed speed adjustment. For example, the power control circuit 160 may reference a synergic control scheme, such as an algorithm or a lookup table, to determine a voltage setpoint and/or a wire feed speed setpoint corresponding to the user input. A lookup table may be stored in, for example, the storage device(s) 123 and/or the memory 124 of the control circuitry 134.

The example power control circuit 160 generates one or more control signals to control the welding-type power supply 102 to perform a voltage adjustment and to control the wire feeder 104 to perform a wire feed speed adjustment. For example, the power control circuit 160 may provide a wire feed speed command to the control circuitry 134 to control the wire feed speed of the wire drive 136, and/or transmit a control signal to the power supply 102 via the communications transceiver 119 and the communication cable 154 to control the output voltage of the power supply 102.

In some examples, the synergic control of the voltage and the wire feed speed causes the power control circuit 160 to change a deposition mode in response to the user input via the power selector circuit 156. For example, GMAW deposition modes, such as an arcless hotwire mode, a regulated metal deposition mode, a controlled short circuit mode, a short arc mode, a pulse spray mode, or a spray transfer mode, typically correspond to different voltage ranges (with some overlap between some modes).

In some examples, the control circuitry 112 implements a trigger hold feature that enables the operator to set a particular synergic output. When the trigger hold is engaged, the operator may release the power selector 156 (e.g., resulting in a normalized value of the control signal falling to less than a threshold value associated with outputting welding-type power), and the control circuitry 112 continues to maintain the synergic output using a hold value of the control signal 158. In some examples, the trigger hold is engaged after a substantially constant output (e.g., less than a threshold deviation) is sustained for a threshold time period. Additionally or alternatively, the torch 106, the wire feeder 104, and/or any other device may include an input device (e.g., a button, switch, etc.) that provides a control signal hold command to the control circuitry 112. When the trigger hold is engaged, such as the operator releasing the power selector 156, the control circuitry 112 determines the appropriate synergic output and controls the power conversion circuitry 110 and the wire feeder 104 based on the hold value determined in association with the control signal hold command. For example, the hold value may be determined using a value at which the operator held the power selector 156 for a threshold period of time to generate the control signal hold command, and/or a value of the control signal 158 at the time the control signal hold command was generated.

The control circuitry 112 may cause the trigger hold feature to time out, and disable the trigger hold feature, in response to the operator not using the trigger hold function within a threshold time period. For example, if the operator is unaware that the trigger hold feature is available or ready to be engaged, the operator may not intend to continue the welding-type operation in response to releasing the trigger of the welding torch 106. In other cases, the operator may not desire to use the trigger hold, and instead prefers to continue using (e.g., varying) the synergic output during the welding-type operation.

In some examples, the control circuitry 112 responds to the control signal hold command by outputting a perceptible alert to inform the operator that the trigger hold may be engaged (e.g., when the power selector 156 is released). Example alerts may include a visual alert, an audible alert, a haptic alert, and/or any other type of perceptible feedback. Example trigger hold feedback may include, for example, an audible signal (e.g., a beep, tone, audible message, and/or any other audible feedback via a speaker in the power supply 102, the wire feeder 104, the torch 106, a helmet of the operator, and/or any other speaker), a visual signal (e.g., a light, LED, display, and/or any other visual feedback via the power supply 102, the wire feeder 104, the torch 106, a helmet of the operator, and/or any other visual device), haptic feedback (e.g., a tactile or other haptic feedback at the torch 106 or other location which can be perceived by the operator), and/or any other form of feedback. The trigger hold feedback signal conveys to the operator that the trigger hold function is engaged at the present synergic output level, should the operator choose to use the trigger hold function (e.g., by releasing the trigger or other variable input device). In some examples, the torch 106 includes a haptic generator 162, such as a vibration motor, an eccentric rotating mass actuator, a piezoelectric actuator, and/or any other type of haptic generator, to create haptic feedback to the operator, and the control circuitry 112 is configured to output a haptic feedback signal to control the vibration motor, in response to the control signal hold command.

The control circuitry 112 generates a feedback control signal. The feedback control signal may alert the operator of one or more events during the welding operation. According to the invention, the feedback control signal controls an operator feedback device to generate an output that is directly proportional or inversely proportional to a value of the synergic control signal. The feedback control signal may be used to control devices internal to the power supply 102 (e.g., the display 116, a speaker 164, etc.) and/or devices external to the power supply 102 (e.g., devices in an operator helmet, at the torch 106, at the wire feeder 104, etc.). Example events are associated with the synergic control by the operator, such as alerting the operator when the value of the control signal 158 is outside of a predetermined range, or window, of values. The predetermined range of values may be defined by the operator and/or determined by the control circuitry 112 using welding parameters (e.g., physical parameters of the weld, etc.), a weld procedure specification (WPS), and/or any other information.

Other example events associated with the synergic control include feedback representative of the value of the control signal 158 and/or of the synergic output (e.g., the power, voltage, and/or wire feed speed). For example, the control circuitry 112 may control the haptic generator 162 to increase the strength and/or frequency of the haptic feedback proportionally (or inversely proportional) to the control signal and/or the synergic output, change a haptic feedback pattern based on a characteristic of the synergic output (e.g., the deposition mode, whether the control signal is within a subrange of the input value range, etc.). Additionally or alternatively, the control circuitry 112 may output, based on the value of the control signal and/or the synergic output, audio that increases in amplitude, frequency, and/or any other characteristic. The audio-based output may be, for example, a speaker or buzzer on the power supply 102, the wire feeder 104, the torch 106, a helmet worn by the operator, and/or a separate device. Additionally or alternatively, the control circuitry 112 may output the audio feedback using arc-based audio, using techniques such as those disclosed in U.S. Patent Publication No. 2019/0015920 (Knoener et al.), filed July 12, 2017, entitled "Methods and Apparatus to Communicate via a Welding Arc."

In some examples, the control circuitry 112 controls visual feedback (e.g., an LED, a blinking light, a graphic on the display 116, etc.) that changes in color, graphic, blinking frequency, and/or any other visual feedback technique. For example, the control circuitry 112 may update a graphic on the display 116 that illustrates the value of the control signal 158 and/or the synergic output (e.g., power, voltage, and/or wire feed speed) within a range. The range may specify upper and lower limits of the synergic output and/or the input value range of the control signal 158, and an indicator illustrating the current input signal or synergic output is displayed with respect to the graphic. The range may be based on, for example, the physical characteristics of the welding operation, an operator-selected range, and/or any other variables.

In still other examples, the control circuitry 112 may output the feedback control signal in response to a change in the control of the synergic output, such as when changing from a first subrange of the input value range to a second subrange of the input value range, when changing deposition modes, and/or any other change that may be implemented by the operator using the power selector 156. For example, if the operator reduces pressure on a trigger to reduce synergic output, the control circuitry 112 may generate the feedback control signal in response to the control signal 158 traversing a threshold point (e.g., a threshold value of the control signal 158) representing a change in control.

The example control circuitry 112 may also filter the control signal 158 to avoid unintended changes in the synergic output caused by difficulty in maintaining the power selector 156 in a steady position. For example, the control circuitry 112 may filter the control signal 158 to reduce the influence of short-term or transient changes in the synergic output. An example filter technique may involve determining the synergic output using a set of most recent samples of the control signal 158, and applying weights to the samples of the control signal 158 based on the age of the samples. Thus, older samples are more heavily weighted in the determination of the synergic output than the more recent samples. In some such examples, the weights may have a rapid increase after a threshold age of the samples, such that samples measured less than a threshold time prior are weighted very low and samples measured more than the threshold time prior are weighted substantially higher.

Another example technique that may be used involves determining a filtering subrange of values of the control signal 158 based on the value of the control signal 158 at a given time. While the value of the control signal 158 at subsequent times remains within the filtering subrange of values, the control circuitry 112 synergically controls the voltage of the welding-type power and the wire feed speed based on the value of the control signal 158 used to determine the filtering subrange.

In some examples, the control circuitry 112 maps the range of values of the control signal 158, or a subrange of the values, to an entire range of output power of which the welding-type system 100 is capable. In other examples, the range of values of the control signal 158 is mapped to a subrange of the synergic output and/or subranges of variables (e.g., voltage and wire feed speed) involved in generating the synergic output. For example, the control circuitry 112 may determine a recommended range and/or a permissible range of synergic output based on the physical characteristics of the welding-type operation, which may be input via the user interface 114, and map the recommended range and/or a permissible range of synergic output to the range of values of the control signal such that the synergic output cannot go outside of the mapped subrange of the synergic output. Example physical characteristics that may be used to determine the subrange of synergic output may include a workpiece thickness, a workpiece material, a wire composition, a wire diameter, and/or a shielding gas composition. By mapping the range of values of the control signal 158 to a subrange that is determined to be recommended or permissible for the physical characteristics of the welding-type operation, the operator may be prevented from using a synergic output that is not recommended for the particular physical characteristics of the weld, thereby improving weld quality and reducing errors and/or rework.

Additionally or alternatively, the control circuitry 112 may map subranges of the control signal 158 to separate subranges of synergic output, in which the subranges of the control signal 158 are not equally wide and/or the subranges of the synergic output are not equally wide. In this manner, the control circuitry 112 may enable an operator to have a higher degree of control of the synergic output in a portion of interest of the range of the power selector 156 (e.g., a portion of the travel range of a trigger or foot pedal) than in another portion.

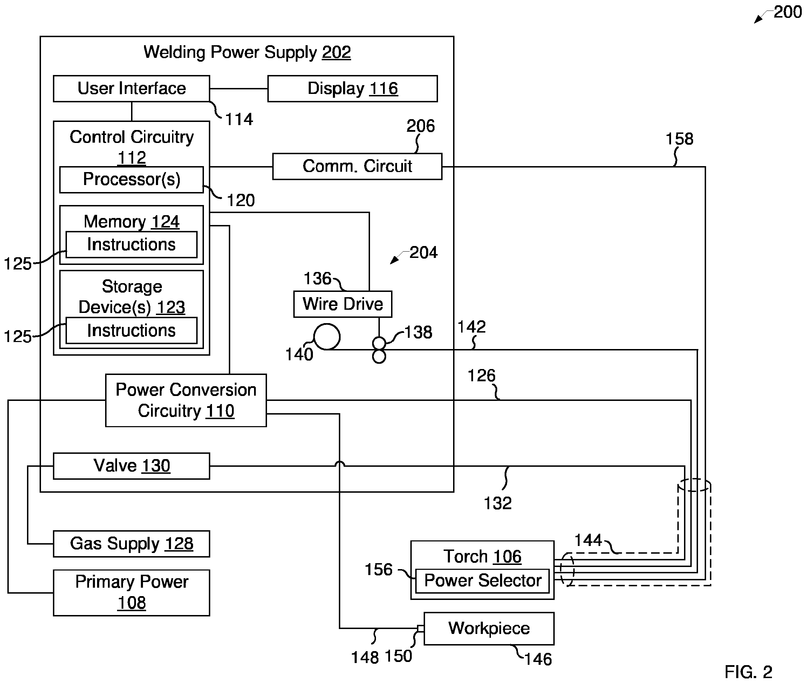

FIG. 2 is a block diagram of another example welding-type system 200 configured to provide synergic power control with a welding-type power supply 202 having an integrated wire feeder 204. The example welding-type power supply 202 includes the power conversion circuitry 110, control circuitry 112, the user interface 114, the display 116, the processor(s) 120, the storage devices(s) 123, the memory 124, the instructions 125, and the valve 130 of the example power supply 102 of FIG. 1.

In contrast with the example system 100, in the example of FIG. 2 the power supply 202 includes the integrated wire feeder 204 instead being connected to a remote wire feeder. The power supply 202 of FIG. 2 outputs welding-type power and electrode wire to the torch 106, which includes the example power selector circuit 156.

The integrated wire feeder 204 includes the wire drive 136, the drive rollers 138, and the wire spool 140, and feeds the wire through a torch cable 142 to the torch 106.

The example welding-type power supply 202 includes a communication circuit 206 to receive the control signal 158 from the power selector circuit 156 (e.g., during a welding operation). In some examples, the communication circuit 206 converts an analog signal to a digital signal for use by the control circuitry 112 and/or receives a digital signal from the power selector circuit 156. The example control circuitry 112 synergically controls the voltage of the welding-type power (e.g., by controlling the power conversion circuitry 110) and the wire feed speed (e.g., by controlling the wire drive 136) based on the control signal 158. In this manner, the example control circuitry 112 may operate in a similar manner as the power control circuit 160 of FIG. 1.

The control circuitry 112 may reference a synergic control scheme, such as an algorithm or a lookup table, to determine a voltage setpoint and/or a wire feed speed setpoint corresponding to the user input. A lookup table may be stored in, for example, the storage device(s) 123 and/or the memory 124 of the control circuitry 112.

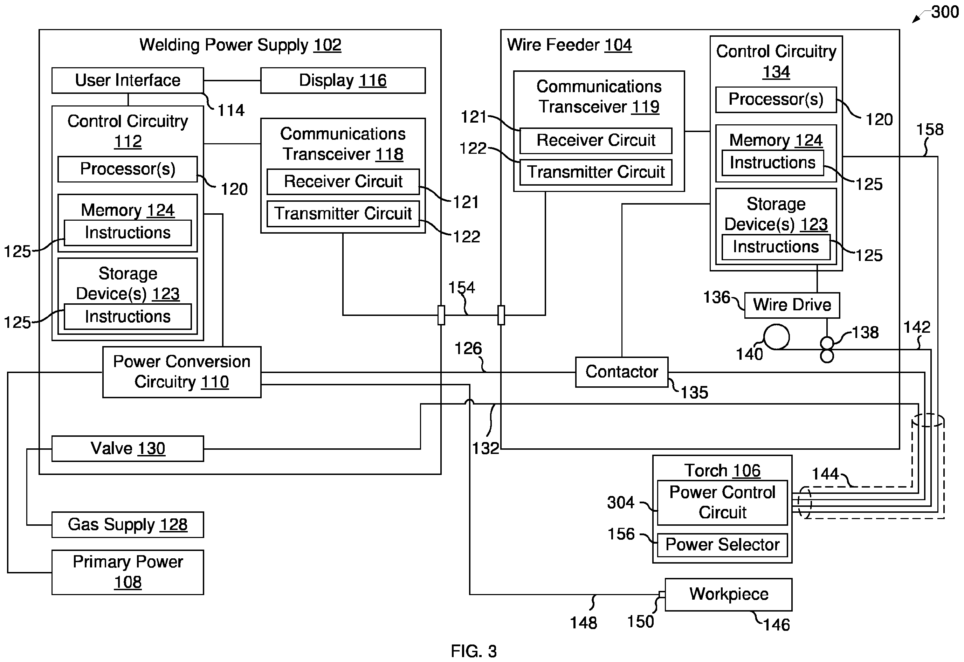

FIG. 3 is a block diagram of another example welding-type system 300 including a torch 302 having a power control circuit 304 configured to provide synergic power control. The example power control circuit 304 in the torch 106 may be implemented in a similar manner as the power control circuit 160 described above with reference to FIG. 1.

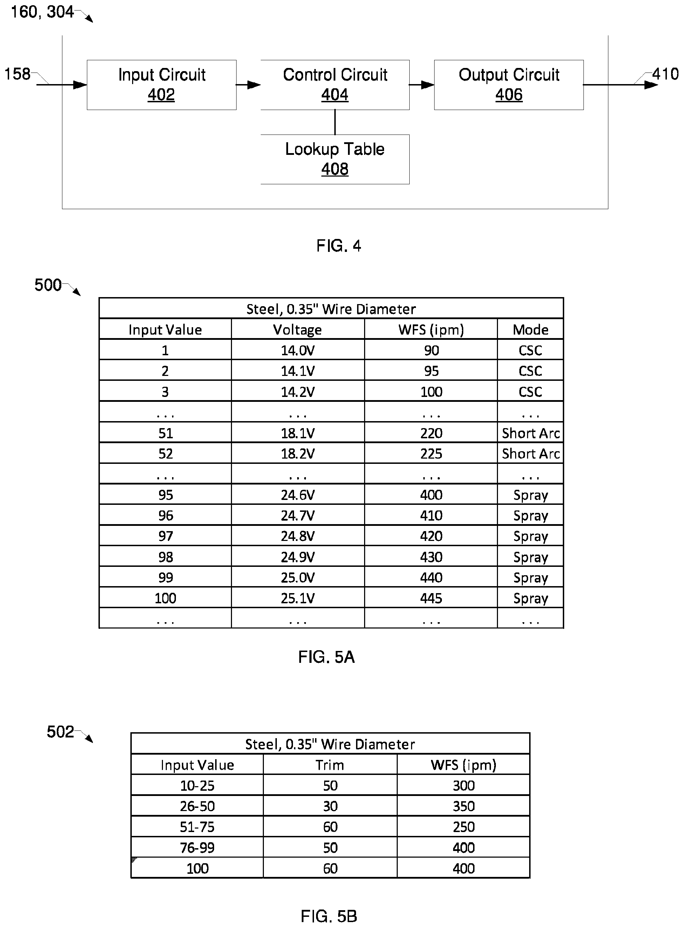

FIG. 4 is a block diagram of an example implementation of the power control circuits 160 and/or 304 of FIGS. 1 and 3. The power control circuit 160, 304 of FIG. 4 may be implemented, for example, in the torch 106, the remote wire feeder 104, a foot pedal, the power supply 102, and/or any other component of the systems 100, 200, 300 of FIGS. 1-3.

The example power control circuit 160, 304 of FIG. 4 includes an input circuit 402, a control circuit 404, and an output circuit 406. The input circuit 402 identifies a user input during a welding-type operation involving welding-type power. For example, the input circuit 402 may receive the control signal 158 from the power selector circuit 156 when an operator controls the power selector circuit 156 during a weld to synergically adjust the welding output.

The control circuit 404 determines a voltage adjustment of the welding-type power and a wire feed speed adjustment based on the user input (e.g., based on the control signal 158). For example, the control circuit 404 may determine the voltage adjustment and the wire feed speed adjustment by interpreting the user input according to a synergic control scheme relating the voltage of the welding-type power and the wire feed speed output by the torch 106. In the example of FIG. 4, the control circuit 404 may look up the voltage adjustment and the wire feed speed adjustment in a lookup table based on the control signal 158.

In some examples, the control circuit 404 identifies or determines that the deposition mode is to be changed (e.g., from a first deposition mode to a second deposition mode) in response to the user input. For example, as the synergic control scheme causes the voltage to increase or decrease, a threshold may be crossed that causes the control circuit 404 to determine (e.g., based the voltage adjustment, the wire feed speed adjustment, the lookup table 408, and/or any other synergic control factors) that the output power is more appropriately suited to a different deposition mode or transfer mode. Example deposition modes that may be selected by the control circuit 404 include an arcless hotwire mode, a regulated metal deposition mode, a controlled short circuit mode, a short arc mode, a pulse spray mode, or a spray transfer mode. In some examples, the control circuit 404 may apply a hysteresis to the thresholds so that the control circuit 404 does not repeatedly switch between deposition modes having similar or overlapping voltage and/or wire feed speed ranges.

The output circuit 406 generates one or more control signals 410 to control the power supply 102 providing the welding-type power (e.g., to the torch 106) to perform the voltage adjustment, and/or to control the wire feeder 104 to perform the wire feed speed adjustment. In some examples, the one or more control signals 410 are transmitted to different devices (e.g., the power supply 102 and the remote wire feeder 104). In some other examples, the one or more control signals 410 are transmitted to a single device (e.g., from the power supply 102 to the remote wire feeder 104, from the remote wire feeder 104 to the power supply 102, from the torch 106 to the power supply 202 including the integrated wire feeder 204, etc.).

FIG. 5A is an example table 500 including corresponding voltage, wire feed speed, and process modes that may be used to determine voltage setpoints, wire feed speed setpoints, and/or process modes for performing welding operations. The example table 500 may be used to implement the lookup table 408 of FIG. 4. While one example table 500 is shown in FIG. 5A, the lookup table 408 may include multiple tables corresponding to different welding conditions (e.g., different workpiece materials, different wire types, different gas types, etc.). The synergic control scheme represented in the lookup table 408 enables the operator to adjust the welding output to react to changes in welding conditions, such as changes in workpiece thickness and/or seam orientation.

The example lookup table 500 of FIG. 5A correlates different input values (e.g., values represented by the control signal 158) with corresponding voltages (e.g., arc voltage setpoints), wire feed speeds, and/or deposition modes. For example, as an operator increases a value of the control signal 158 and/or decreases the value of the control signal 158 during a welding-type operation (e.g., by incrementally depressing and/or releasing the trigger, by increasing and/or decreasing a control device that is operatively linked to a potentiometer, etc.), the control circuit 404 of FIG. 4 may look up incrementally increasing and/or decreasing input values in the table 500 to determine the corresponding output voltage, wire feed speed, and/or deposition mode. In some examples, the corresponding voltages, wire feed speeds, and/or deposition modes are empirically determined and populated into the table 500 prior to the welding operations (e.g., during manufacture, downloading a firmware update, downloading a software package, etc.).

FIG. 5B is another example table 502 including schedules and corresponding weld parameters for performing welding operations. The example table 502 may be used to implement the lookup table 408 of FIG. 4 instead of or in addition to the table 500. In the example table 502, different ranges of input values correspond to different schedules, and each schedule may be assigned different variables. When the control circuitry 112 receives the control signal 158, the control circuitry 112 looks up the schedule corresponding to the value of the control signal 158 as the input value, and controls the power conversion circuitry 112 according to the parameters specified in the table 502 in association with the schedule. The parameters and/or the input values associated with the schedules may be set by the operator. Using the example table 502, the operator may switch between preconfigured schedules during a welding-type operation by controlling the control signal 158 via the power selector 156 (e.g., based on an amount of depression of a trigger, foot pedal, or other variable input device).

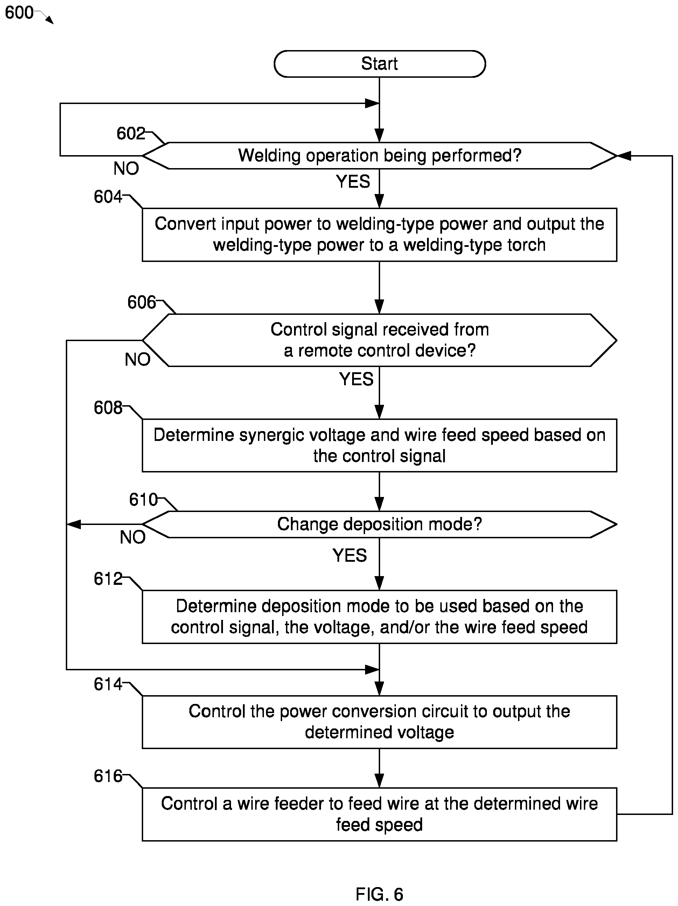

FIG. 6 is a flowchart representative of example machine readable instructions 600 which may be executed to implement one or more disclosed example methods and/or apparatus. The example instructions 600 may be executed by the example control circuitry 112, the example control circuitry 134, and/or the example power control circuits 160, 304 of FIGS. 1-4 to synergically control a welding-type output during a welding-type operation. The example instructions 600 are described with reference to the example welding-type power supply 202 of FIG. 2, but may be modified for execution by the power control circuits 160, 304 of FIGS. 1, 3, and/or 4.

At block 602, the example control circuitry 112 determines whether a welding operation is being performed. If a welding operation is not being performed (block 602), the control circuit 404 iterates block 602 until welding is occurring. When the control circuitry 112 determines that welding is occurring (block 602), at block 604 the power conversion circuitry 110 converts input power to welding-type power and outputs the welding-type power to the welding torch 106.

At block 606, the communications circuit 206 determines whether a control signal (e.g., the control signal 158) is received from a remote control device (e.g., from the power selector circuit 156). If the control signal 158 has been received from the remote control device (block 606), at block 608 the control circuitry 112 determines the synergic voltage and the wire feed speed based on the control signal 158.

At block 610, the control circuitry 112 determines whether a change in deposition mode is required (e.g., based on the synergic control scheme used to determine the synergic voltage and the wire feed speed). If a change in deposition mode is required (block 610), at block 612 the control circuitry 112 determines a deposition mode to be used based on the control signal, the voltage, and/or the wire feed speed.

After determining the deposition mode (block 612), if no change in the deposition mode is to occur (block 610), or if no control signal has been received (block 606), at block 614 the control circuitry 112 controls the power conversion circuitry 110 to output the determined voltage (e.g., via direct control and/or via a transceiver circuit).

At block 616, the control circuitry 112 controls a wire feeder (e.g., the integrated wire feeder 204, the remote wire feeder 104) to feed wire at the determined wire feed speed (e.g., via direct control and/or via a transceiver circuit).

After controlling the power conversion circuitry 110 and/or the wire feeder 104, 204, control returns to block 602.

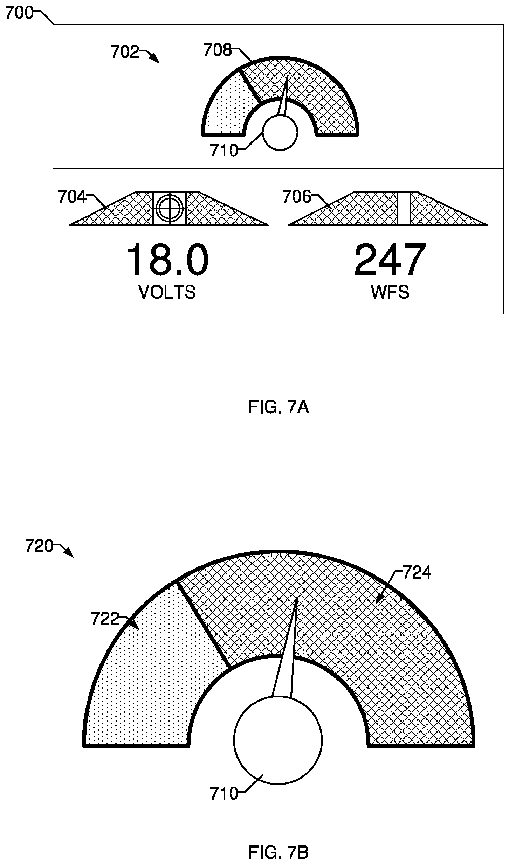

FIGS. 7A-7D illustrate example interfaces that may be used to implement the display of FIGS. 1-3 to provide visual feedback based on a control signal used to synergically control a welding output.

FIG. 7A illustrates an example display interface 700 that may be presented on the example display 116 of FIGS. 1, 2, and/or 3 to provide visual feedback based on the control signal 158. The example interface 700 includes a synergic indicator 702, a voltage parameter indicator 704, and a wire feed speed parameter indicator 706. The synergic indicator 702 includes a graphic 708 representative of a range of the control signal 158, one or more subranges of the control signal 158, a range of the synergic output, and/or one or more subranges of the synergic output. The synergic indicator 702 further includes an indicator 710, such as a needle, which points to a location within the graphic 708 corresponding to the value of the control signal 158 within the input value range.

FIG. 7B illustrates an example graphical indicator 720 that may be used to implement the synergic indicator 702 of the interface 700. The example graphical indicator 720 includes two digital ranges 722, 724 for the value of the control signal 158 (e.g., an analog trigger or foot pedal signal). The control signal 158 is in the first digital range 722 when the value of the control signal 158 (e.g., the trigger depression) is between 1% and 30% (inclusive) of the normalized input value range, and is in the second digital range 724 when the value of the control signal 158 is between 31% and 100% (inclusive).

When the control signal 158 is within the first digital range 722, the control circuitry 112 controls the power conversion circuitry 110 and/or the wire feeder 104 to perform a lower-energy deposition mode such as a controlled short circuit (CSC) welding or regulated metal deposition (RMD^{™}). When the control signal 158 is within the second digital range 724, the control circuitry 112 controls the power conversion circuitry 110 and/or the wire feeder 104 to perform a higher-energy deposition mode such as spray arc welding or pulse spray. While example lower-energy and higher-energy deposition modes are mentioned above, any other welding-process and/or deposition mode may be used.

The ranges 722, 724 are considered digital ranges in the example because there is a single synergic output level setting when the control signal 158 is within the given range 722, 724 (e.g., there is a single synergic output for the entire range 722 and a single synergic output for the entire range 724, and the synergic output does not vary within a range 722, 724). Thus, in the example of FIG. 7B, the control circuitry 112 controls the power conversion circuitry 110 and the wire feeder 104 to be off (e.g., when the control signal 158 is below the range 722, such as when the trigger is released), to use a lower-energy deposition mode having a first synergic output (e.g., when the control signal 158 is within the range 722), or to use a higher-energy deposition mode having a second synergic output (e.g., when the control signal 158 is within the range 724).

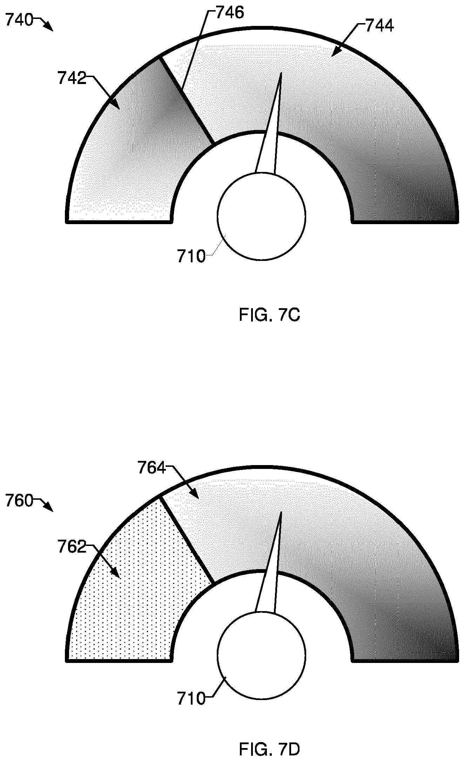

FIG. 7C illustrates another example graphical indicator 740 that may be used to implement the synergic indicator 702 of the interface 700. Instead of using digital ranges as in the example of FIG. 7B, the control circuitry 112 may use two or more analog ranges 742, 744. The example ranges 742, 744 are considered to be analog ranges because the synergic output may change within each range 742, 744 based on the value of the control signal 158. The different ranges 742, 744 may be selected based on having different deposition modes, different relationships between the control signal 158 and the synergic output (e.g., changes to the control signal 158 in one of the ranges 742, 744 may result in a different amount of change to the synergic output than the other of the ranges 742, 744), and/or any other distinction. There are two analog ranges for the analog trigger.

As shown in FIG. 7C, the example graphical indicator 740 may illustrate gradients within each of the ranges 742, 744 to illustrate the relative synergic output within each range 742, 744. Thus, the lower-energy portion of the range and gradient in the range 744 may still have a higher synergic output than the higher-energy portion of the range 742.

FIG. 7D illustrates another example graphical indicator 760 that may be used to implement the synergic indicator 702 of the interface 700. Instead of using only digital ranges as in the example of FIG. 7B, or only analog ranges as in the example of FIG. 7C, the graphical indicator 760 includes one or more digital ranges 762 and one or more analog ranges 764. When the control signal 158 corresponds to any value within the digital range 762, the synergic output is the same value. Conversely, the control circuitry 112 adjusts the synergic output based on the value of the control signal 158 relative to the values of the analog range 764 when the control signal 158 is within the analog range 764.

The number of ranges 722, 724 (or 742, 744, or 762, 764), the correlation of the ranges 722, 724 (or 742, 744, or 762, 764) to values of the control signal 158 (e.g., the transitions between the ranges 722, 724 (or 742, 744, or 762, 764), and/or the synergic output of the ranges 722, 724 (or 742, 744, or 762, 764) may be automatically configured and/or manually configured by the operator. For example, the operator may configure the transition point between the ranges 722, 724 (or 742, 744, or 762, 764) via the user interface 114, via the operator interface 134, and/or via a programming input from the torch 106. Additionally or alternatively, the operator may configure the synergic output of the ranges 722, 724 (or 742, 744, or 762, 764) to control, for example, the power level (e.g., for digital ranges) or range of power levels (e.g., for analog ranges), the deposition mode, whether a range is digital or analog, and/or any other aspects of the ranges 722, 724 (or 742, 744, or 762, 764).

In an example process to configure the transition between the ranges 742, 744, the operator may set a transition point 746 at a first location to set a range of synergic output of the first analog range 742. For example, if the operator prefers to set the transition point 746 based on the first analog range 742, the operator may set the value of the transition point 746 to a value higher than the expected desired point (or may set it up to 100% of the normalized value of the control signal 158). As the operator performs a trial or practice weld, the operator may push a button or other input device on the torch 106, wire feeder 104, or power supply 102 to cause the control circuitry 112 to assign the transition point 746 to the present value of the control signal 158 and/or an offset to the value of the control signal 158. The example control circuitry 112 may then map the ranges 742, 744 to the respective ranges of the control signal 158 and to the synergic output.

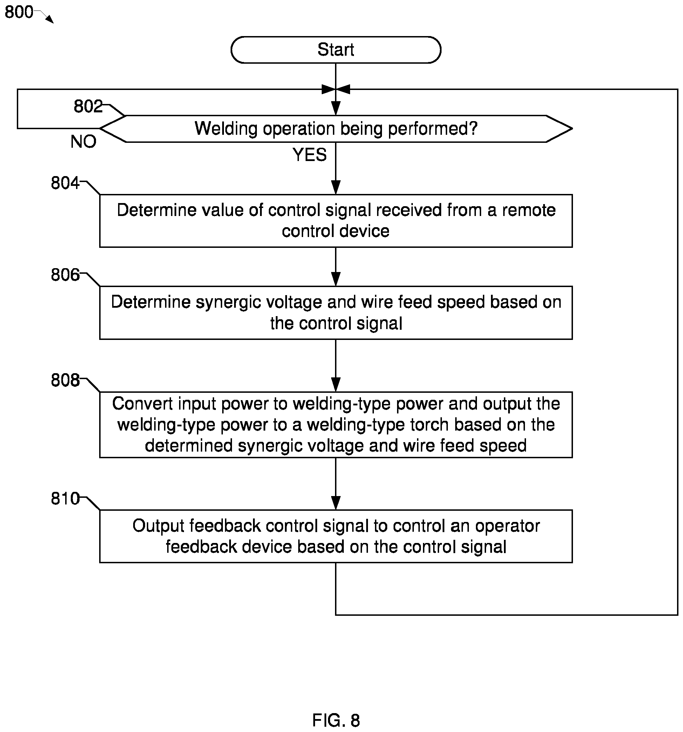

FIG. 8 illustrates a flowchart representative of example machine readable instructions 800 which may be executed by the welding-type system 100 of FIGS. 1, 2, and/or 3 to synergically control the welding-type system 100 based on a control signal 158 and to output a feedback signal to the operator based on the control signal 158. The example instructions 800 may be executed by the example control circuitry 112, the example control circuitry 134, and/or the example power control circuits 160, 304 of FIGS. 1-4 to synergically control a welding-type output during a welding-type operation. The example instructions 800 are described with reference to the example welding-type power supply 102 of FIG. 1, but may be modified for execution by the power control circuits 160, 304 of FIGS. 1, 3, and/or 4.

At block 802, the control circuitry 112 determines whether a welding operation is being performed. For example, the control circuitry 112 may determine whether at least a threshold value of the control signal is received from a trigger of the welding torch 106 (e.g., the power selector 156), a foot pedal, and/or other control input. If a welding operation is not being performed (block 802), control returns to block 802 to await a welding operation.

If a welding operation is being performed (block 802), at block 804 the control circuitry 112 determines a value of the control signal (e.g., the control signal 158) received from a remote control device (e.g., the power selector 156 of the torch 106).

At block 806, the control circuitry 112 determines a synergic voltage and wire feed speed based on the received value of the control signal. For example, the control circuitry 112 may determine a power level corresponding to the received value of the control signal, and calculate or look up (e.g., in a look up table) voltage and wire feed speed parameters corresponding to the power level.

At block 808, the control circuitry 112 controls the power conversion circuitry 110 to convert the input power to welding-type power and outputs the welding-type power to the torch 106 based on the determined voltage and wire feed speed. For example, the control circuitry 112 may control the power conversion circuitry 110 based on the determined voltage and control the wire drive 136 based on the determined wire feed speed.

At block 810, the control circuitry 112 outputs a feedback control signal to control an operator feedback device based on the control signal 158. The control circuitry 112 generates the feedback control signal to control an operator feedback device to generate an output that is directly proportional or inversely proportional to a value of the control signal 158. For example, the control circuitry 112 may control one or more of: a vibration motor, an eccentric rotating mass actuator, a piezoelectric actuator, and/or any other haptic generator to provide haptic feedback to an operator; an audio output device (e.g., the speaker) to provide audio feedback to an operator; a visual output device (e.g., the display 116, one or more LEDs, etc.) to provide visual feedback to an operator; and/or any other feedback device. The example control circuitry 112 may generate the feedback control signal in response to identifying that the synergic control signal is outside of a predetermined range of values of the control signal 158, in response to the control signal 158 changing from a first predetermined range of values of the control signal 158 to a second predetermined range of values of the control signal 158, and/or to provide any other information about the synergic control to the operator and/or events associated with the synergic control.

After controlling the power conversion circuitry 110 and/or the wire feeder 104, 204, control returns to block 802.

While the examples disclosed above are described with reference to synergic voltage and wire feed speed, the disclosed systems and methods may control other parameters based on, for example, the type of welding-type operation being performed. For example, instead of or in addition to controlling voltage, disclosed systems and methods may synergically control current with one or more other parameters.

The present methods and systems may be realized in hardware, software, and/or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein. As used herein, the term "non-transitory machine-readable medium" is defined to include all types of machine readable storage media and to exclude propagating signals.

As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present invention as defined in the appended claims.

## Claims

1. A welding-type power supply (102, 202), comprising:
power conversion circuitry (110) configured to convert input power to welding-type power and to output the welding-type power to a welding-type torch;
the welding-type power supply being **characterised by** the following:
a communication circuit (206) configured to receive a synergic control signal (158) from a remote control device during a welding-type operation; and
control circuitry (112) configured to:
based on the synergic control signal (158), synergically control at least two of a voltage of the welding-type power output by the power conversion circuitry, a current of the welding-type power, or a wire feed speed;
output a feedback control signal to control an operator feedback device to generate an output that is directly proportional or inversely proportional to a value of the synergic control signal (158).

2. The welding-type power supply (102, 202) as defined in claim 1, wherein the control circuitry (112) is configured to output the feedback control signal to control at least one of a vibration motor, an eccentric rotating mass actuator, or a piezoelectric actuator to provide haptic feedback to an operator.

3. The welding-type power supply (102, 202) as defined in claim 1, wherein the control circuitry (112) is configured to output the feedback control signal in response to identifying that the synergic control signal (158) is outside of a predetermined range of values of the synergic control signal (158).

4. The welding-type power supply (102, 202) as defined in claim 1, wherein the control circuitry (112) is configured to output the feedback control signal in response to the synergic control signal (158) changing from a first predetermined range of values of the synergic control signal (158) to a second predetermined range of values of the synergic control signal (158).

5. The welding-type power supply (102, 202) as defined in claim 1, wherein the control circuitry (112) is configured to synergically control the voltage and the wire feed speed by:
setting a commanded power level of the welding-type power based on the synergic control signal (158);
determining the voltage and the wire feed speed corresponding to the commanded power level;
controlling the power conversion circuitry (110) to output the voltage; and
controlling a wire feeder based on the wire feed speed.

6. The welding-type power supply (102, 202) as defined in claim 1, wherein the communication circuit (206) is configured to receive the synergic control signal (158) from the welding-type torch.

7. The welding-type power supply (102, 202) as defined in claim 6, wherein the control circuitry (112) is configured to output the feedback control signal to the welding-type torch to control the operator feedback device on the welding-type torch.

8. The welding-type power supply (102, 202) as defined in claim 1, wherein the control circuitry (112) is configured to synergically control the voltage of the welding-type power by changing a deposition mode from a first deposition mode to a second deposition mode in response to the synergic control signal (158), and the control circuitry (112) is configured to output the feedback control signal in response to changing the deposition mode.

9. The welding-type power supply (102, 202) as defined in claim 1, wherein the synergic control signal (158) is configured to output the feedback control signal to control an audio output device to provide audio feedback to an operator.

10. The welding-type power supply (102, 202) as defined in claim 1, wherein the synergic control signal (158) is configured to output the feedback control signal to control a visual output device to provide visual feedback to an operator.

11. The welding-type power supply (102, 202) as defined in claim 10, wherein the visual feedback comprises a graphic representative of a range of the control signal, one or more subranges of the control signal, a range of at least one of the synergically controlled voltage, current, or wire feed speed, and one or more subranges of the at least one of the synergically controlled voltage, current, or wire feed speed.

## Patentansprüche

1. Schweißstromversorgung (102, 202), aufweisend:
eine Leistungsumwandlungsschaltung (110), die zur Umwandlung von Eingangsleistung in Schweißstrom und zur Ausgabe des Schweißstroms an einen Schweißbrenner konfiguriert ist;
wobei die Schweißstromversorgung durch Folgendes gekennzeichnet ist:
eine Kommunikationsschaltung (206), die konfiguriert ist, während eines Schweißvorgangs ein synergetisches Steuersignal (158) von einer Fernsteuervorrichtung zu empfangen; und
eine Steuerschaltung (112), die konfiguriert ist zum:
synergetischen Regeln, basierend auf dem synergetischen Steuersignal (158), von mindestens zwei von einer Spannung des Schweißstroms, der von der Leistungsumwandlungsschaltung ausgegeben wird, einer Stromstärke des Schweißstroms oder einer Drahtvorschubgeschwindigkeit;
Ausgeben eines Rückkopplungssteuersignals, um eine Bedienerrückmeldevorrichtung so zu steuern, dass sie eine Ausgabe erzeugt, die direkt proportional oder umgekehrt proportional zu einem Wert des synergetischen Steuersignals (158) ist.

2. Schweißstromversorgung (102, 202) nach Anspruch 1, wobei die Steuerschaltung (112) konfiguriert ist, das Rückkopplungssteuersignal auszugeben, um mindestens einen von einem Vibrationsmotor, einem rotierenden Exzentermassenaktor oder einem piezoelektrischen Aktor so zu steuern, dass eine haptische Rückmeldung für einen Bediener bereitgestellt wird.

3. Schweißstromversorgung (102, 202) nach Anspruch 1, wobei die Steuerschaltung (112) konfiguriert ist, das Rückkopplungssteuersignal in Reaktion auf ein Identifizieren, dass das synergetische Steuersignal (158) außerhalb eines vorbestimmten Wertebereichs des synergetischen Steuersignals (158) liegt, auszugeben.

4. Schweißstromversorgung (102, 202) nach Anspruch 1, wobei die Steuerschaltung (112) konfiguriert ist, das Rückkopplungssteuersignal in Reaktion darauf auszugeben, dass das synergetische Steuersignal (158) von einem ersten vorbestimmten Wertebereich des synergetischen Steuersignals (158) zu einem zweiten vorbestimmten Wertebereich des synergetischen Steuersignals (158) wechselt.

5. Schweißstromversorgung (102, 202) nach Anspruch 1, wobei die Steuerschaltung (112) konfiguriert ist, die Spannung und die Drahtvorschubgeschwindigkeit synergetisch zu regeln, durch:
Einstellen einer befohlenen Leistungsstufe des Schweißstroms basierend auf dem synergetischen Steuersignal (158);
Bestimmen der Spannung und der Drahtvorschubgeschwindigkeit entsprechend der befohlenen Leistungsstufe;
Steuern der Leistungsumwandlungsschaltung (110), um die Spannung auszugeben; und
Steuern eines Drahtvorschubs basierend auf der Drahtvorschubgeschwindigkeit.

6. Schweißstromversorgung (102, 202) nach Anspruch 1, wobei die Kommunikationsschaltung (206) konfiguriert ist, das synergetische Steuersignal (158) von dem Schweißbrenner zu empfangen.

7. Schweißstromversorgung (102, 202) nach Anspruch 6, wobei die Steuerschaltung (112) konfiguriert ist, das Rückkopplungssteuersignal an den Schweißbrenner auszugeben, um die Bedienerrückmeldevorrichtung an dem Schweißbrenner zu steuern.

8. Schweißstromversorgung (102, 202) nach Anspruch 1, wobei die Steuerschaltung (112) konfiguriert ist, die Spannung des Schweißstroms durch Ändern eines Abscheidungsmodus von einem ersten Abscheidungsmodus in einen zweiten Abscheidungsmodus in Reaktion auf das synergetische Steuersignal (158) synergetisch zu steuern, und die Steuerschaltung (112) konfiguriert ist, das Rückkopplungssteuersignal in Reaktion auf das Ändern des Abscheidungsmodus auszugeben.

9. Schweißstromversorgung (102, 202) nach Anspruch 1, wobei das synergetische Steuersignal (158) so konfiguriert ist, dass es das Rückkopplungssteuersignal ausgibt, um eine Vorrichtung für akustische Ausgaben so zu steuern, dass sie eine akustische Rückmeldung für einen Bediener bereitstellt.

10. Schweißstromversorgung (102, 202) nach Anspruch 1, wobei das synergetische Steuersignal (158) so konfiguriert ist, dass es das Rückkopplungssteuersignal ausgibt, um eine Vorrichtung für visuelle Ausgaben so zu steuern, dass sie eine visuelle Rückmeldung für einen Bediener bereitstellt.

11. Schweißstromversorgung (102, 202) nach Anspruch 10, wobei die visuelle Rückmeldung eine Grafik aufweist, die einen Bereich des Steuersignals, einen oder mehrere Unterbereiche des Steuersignals, einen Bereich von mindestens einer von der synergetisch geregelten Spannung, Stromstärke oder Drahtvorschubgeschwindigkeit und einen oder mehrere Unterbereiche der mindestens einen von der synergetisch geregelten Spannung, Stromstärke oder der Drahtvorschubgeschwindigkeit darstellt.

## Revendications

1. Alimentation de puissance de type soudage (102, 202) comprenant :
une circuiterie de conversion de puissance (110) configurée pour convertir la puissance d'entrée en puissance de type soudage et pour fournir en sortie la puissance de type soudage vers un chalumeau de type soudage ;
l'alimentation de puissance de type soudage étant **caractérisée par** ce qui suit :
un circuit de communications (206) configuré pour recevoir un signal de commande synergique (158) provenant d'un dispositif de commande à distance durant une opération de type soudage ; et
une circuiterie de commande (112) configurée pour :
sur base du signal de commande synergique (158), commander de manière synergique au moins deux parmi une tension de la sortie de puissance de type soudage par la circuiterie de conversion de puissance, un courant de la puissance de type soudage, ou une vitesse d'alimentation en fil ;
fournir en sortie un signal de commande de rétroaction afin de commander un dispositif de rétroaction d'opérateur pour générer une sortie qui est directement proportionnelle ou inversement proportionnelle à une valeur du signal de commande synergique (158) .

2. Alimentation de puissance de type soudage (102, 202) selon la revendication 1, dans laquelle la circuiterie de commande (112) est configurée pour fournir en sortie le signal de commande de rétroaction afin de commander au moins l'un parmi un moteur à vibration, un actionneur à masse excentrique centrifuge ou un actionneur piézoélectrique pour fournir une rétroaction haptique à un opérateur.

3. Alimentation de puissance de type soudage (102, 202) selon la revendication 1, dans laquelle la circuiterie de commande (112) est configurée pour fournir en sortie le signal de commande de rétroaction en réponse à l'identification que le signal de commande synergique (158) est en dehors d'une plage prédéterminée de valeurs du signal de commande synergique (158).

4. Alimentation de puissance de type soudage (102, 202) selon la revendication 1, dans laquelle la circuiterie de commande (112) est configurée pour fournir en sortie le signal de commande de rétroaction en réponse au signal de commande synergique (158) passant d'une première plage prédéterminée de valeurs du signal de commande synergique (158) à une deuxième plage prédéterminée de valeurs du signal de commande synergique (158).

5. Alimentation de puissance de type soudage (102, 202) selon la revendication 1, dans laquelle la circuiterie de commande (112) est configurée pour commander de manière synergique la tension et la vitesse d'alimentation en fil par :
le réglage d'un niveau de puissance commandé de la puissance de type soudage sur la base du signal de commande synergique (158) ;
la détermination de la tension et de la vitesse d'alimentation en fil correspondant au niveau de puissance commandé ;
la commande de la circuiterie de conversion de puissance (110) pour fournir en sortie la tension ; et
la commande d'un dispositif d'alimentation en fil sur la base de la vitesse d'alimentation en fil.

6. Alimentation de puissance de type soudage (102, 202) selon la revendication 1, dans laquelle le circuit de communications (206) est configuré pour recevoir le signal de commande synergique (158) provenant du chalumeau de type soudage.

7. Alimentation de puissance de type soudage (102, 202) selon la revendication 6, dans laquelle la circuiterie de commande (112) est configurée pour fournir en sortie le signal de commande de rétroaction au chalumeau de type soudage afin de commander le dispositif de rétroaction d'opérateur sur le chalumeau de type soudage.

8. Alimentation de puissance de type soudage (102, 202) selon la revendication 1, dans laquelle la circuiterie de commande (112) est configurée pour commander de manière synergique la tension de la puissance de type soudage en changeant un mode de dépôt d'un premier mode de dépôt à un deuxième mode de dépôt en réponse au signal de commande synergique (158), et la circuiterie de commande (112) est configurée pour fournir en sortie le signal de commande de rétroaction en réponse au changement du mode de dépôt.

9. Alimentation de puissance de type soudage (102, 202) selon la revendication 1, dans laquelle le signal de commande synergique (158) est configuré pour fournir en sortie le signal de commande de rétroaction afin de commander un dispositif de sortie audio pour fournir une rétroaction audio à un opérateur.

10. Alimentation de puissance de type soudage (102, 202) selon la revendication 1, dans laquelle le signal de commande synergique (158) est configuré pour fournir en sortie le signal de commande de rétroaction afin de commander un dispositif de sortie visuelle pour fournir une rétroaction visuelle à un opérateur.

11. Alimentation de puissance de type soudage (102, 202) selon la revendication 10, dans laquelle la rétroaction visuelle comprend un graphique représentatif d'une plage du signal de commande, une ou plusieurs sous-plages du signal de commande, une plage d'au moins l'un parmi une tension, un courant ou une vitesse d'alimentation en fil commandés de manière synergique, et une ou plusieurs sous-plages d'au moins l'un parmi une tension, un courant ou une vitesse d'alimentation en fil commandés de manière synergique.
